# EUROPÄISCHE PATENTANMELDUNG

(11) **EP 3 009 402 A1**
(43) Veröffentlichungstag der Anmeldung: **20.04.2016**
(21) Anmeldenummer: 14188925.3
(22) Anmeldetag: 15.10.2014
(51) Int. Cl.: C01G 19/00, C01G 25/02, C07F 5/00, C07F 7/00

(54) **Verfahren zur Herstellung von gemischten Metallhalogenid-Alkoxiden und Metalloxid-Nanopartikeln**

(71) Anmelder: Justus-Liebig-Universität Gießen, 35390 Gießen (DE)
(72) Erfinder: Brezesinski, Torsten, Dr., 76149 Karlsruhe (DE); Smarsly, Bernd, Dr., 35415 Pohlheim (DE); Suchomski, Christian, Dr., 35390 Gießen (DE)
(74) Vertreter: Stumpf, Peter

(57) **Zusammenfassung**

Bei der vorliegenden Erfindung handelt es sich um ein Verfahren zur Herstellung von Metalloxid-Nanopartikeln mittels der nicht-hydrolytischen Sol-Gel-Methode. Ausgehend von zwei verschiedenen Vorläufersubstanzen, einem Metallhalogenid und einem Metallalkoxid, oder einem gemischten Metallhalogenid-Alkoxid, wird die Reaktionsmischung stufenweise mittels Mikrowellenstrahlung erhitzt, wobei die Edukte, Lösungsmittel und Mittel zur Modifizierung der Oberfläche nicht von Anfang an in der Reaktionsmischung enthalten sind, sondern sukzessive zwischen den einzelnen Heizphasen zugegeben werden. Nach Ausfällung mittels unpolarer Fällungsmittel werden Nanopartikel erhalten, die besonders gut in polarprotischen Lösungsmitteln dispergierbar sind.

Die Erfindung umfasst zudem sowohl die Nanopartikel selbst, als auch deren Verwendung zur Herstellung von Metalloxid-Halbleitersensoren, von funktionalen Beschichtungen auf metallischen oder nichtmetallischen Substraten, sowie von Katalysatoren. Weiterhin umfasst die Erfindung die Verwendung der Metalloxid-Nanopartikel als Additive bei der Verarbeitung von Kunststoffen (Polymeren), als Adsorbentien für Flüssigkeiten oder Gase sowie als Absorbentien für elektromagnetische Strahlung.

## Beschreibung

### Technisches Gebiet der Erfindung

Die Erfindung bezieht sich auf ein Verfahren zur Herstellung von gemischten Metallhalogenid-Alkoxiden, die Metallhalogenid-Alkoxide selbst sowie ihre Verwendung.
Die Erfindung bezieht sich weiterhin auf ein Verfahren zur Herstellung von Metalloxid-Nanopartikeln, auf diese Nanopartikel selbst sowie deren Verwendung zur Beschichtung von Oberflächen, zur Herstellung von Metalloxid-Halbleitersensoren und anderen elektronischen Bauteilen bzw. Geräten, und weiterhin ihrer Verwendung als Katalysatoren, als Absorbentien für elektromagnetische Strahlung oder Adsorbentien für Gase oder Flüssigkeiten.

### Stand der Technik

Metalloxid-Nanopartikel können auf verschiedenste Arten hergestellt werden. Eine bekannte Methode ist die sogenannte Sol-Gel-Methode, bei der eine Lösung eines oder mehrerer Metallsalze durch eine geeignete Reaktion, im Allgemeinen eine säure- oder baseninduzierte Hydrolyse zunächst in ein Sol überführt wird. Im weiteren Verlauf der Umsetzung bildet sich durch Vernetzung der kolloidalen Teilchen (Sol) ein Gel. Wenn die Sol-Gel-Methode für die Herstellung von Nanopartikeln verwendet wird, ist es daher vorteilhaft, wenn die Temperierung sehr schnell und zielgerichtet erfolgt, um die Gelierung, die zu größeren Aggregaten führt, zu unterbinden. Daher ist der Einsatz von Mikrowellenstrahlung, die eine gleichmäßige und schnelle Temperierung gestattet, vorteilhaft. Neben den hydrolytischen gibt es auch nicht-hydrolytische Sol-Gel-Verfahren, bei denen in nicht-wässrigem Reaktionsmedium gearbeitet wird.

In der Offenlegungsschrift WO 2008/105562 A1 wird die gleichzeitige Verwendung zweier Vorläuferverbindungen, TiCl₄ und Ti(OPr)₄, sowie die Anwendung von Mikrowellenstrahlen zur Beheizung des Reaktionsmediums beschrieben, um zu gut dispergierbaren Titandioxid-Nanopartikeln zu gelangen. Als Lösungs- und gleichzeitig Oberflächen-Modifzierungsmittel wird Trialkyl-Phosphinoxid eingesetzt. Die nach diesem Verfahren erhaltenen Nanopartikel sind jedoch nur in unpolaren aprotischen Lösungsmitteln wie etwa Hexan oder Chloroform dispergierbar. Durch Zusatz von polaren bzw. protischen Lösungsmitteln koagulieren diese Dispersionen. Dieses Verhalten ist äußerst nachteilig, da die großtechnische Verwendung unpolar-aprotischer Lösungsmittel aus Umweltschutzgründen grundsätzlich vermieden werden sollte.

Zudem führt die Oberflächenbeschichtung mit Trialkylphosphinen dazu, dass die Nanopartikel eine recht dicke Oberflächenbeschichtung tragen, die zudem phosphorhaltig ist. Der hohe Massenanteil der Alkylphosphinoxidschicht an der Gesamtmasse der Nanopartikel ist nachteilig, unter anderem bei Sinterprozessen, bei denen dieser hohe Anteil an organischen Molekülen auf den Kornoberflächen zu massivem zusätzlichen Schwund führt. Bei erfindungsgemäß hergestellten Nanopartikeln ist dieser nachteilige Effekt weitaus geringer ausgeprägt. Auch die Oberflächeneigenschaften der Metalloxid-Nanopartikel werden durch die Dicke der Alkylphosphinoxidschicht stark beeinflusst.
Die Anwesenheit von Phosphor kann - insbesondere bei dotierten Nanopartikeln und im Bereich katalytischer Anwendungen unerwünscht sein. Phosphor ist ein bekanntes Katalysatorgift, z. B. für Hydrierungs- oder Abgaskatalysatoren.

Ein weiterer Nachteil des in WO 2008/105562 A1 offenbarten Verfahrens ist die hohe Reaktionstemperatur von 290 °C, die einen hohen Energieverbrauch bei der Durchführung des Verfahrens verursacht.

Offenlegungsschrift WO 2009/013187 A1 beschreibt ein weiteres Verfahren, das die Verwendung von Mikrowellenheizung bei der Nanopartikelsynthese offenbart. Die im Rahmen des erfindungsgemäßen Verfahrens verwendeten Substanzen werden zwar mehrheitlich nahegelegt, jedoch beschreibt auch die WO 2009/013187 A1 lediglich ein Verfahren, bei dem eine von Anfang an alle erforderlichen Substanzen enthaltende Reaktionsmischung ohne jegliche Modulation mittels Mikrowelleneinstrahlung auf die Zieltemperatur aufgeheizt wird.

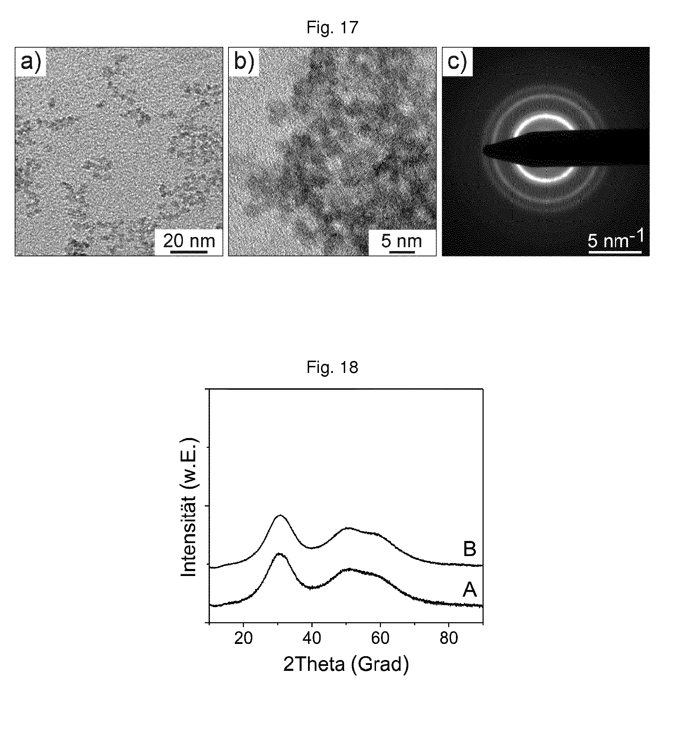

Wie durch Vergleichsversuche (Versuche Nr. V1, V2) gezeigt werden konnte, führt das in WO 2009/013187 A1 offenbarte Verfahren jedoch zu Nanopartikeln, die im Gegensatz zu den erfindungsgemäßen Nanopartikeln von amorpher Natur sind und keinerlei messbare kristallinen Bereiche aufweisen: Die durchgeführte Phasenanalyse mittels Röntgenbeugung zeigt, dass beide erhaltenen Pulver im 2Theta-Bereich, gemessen mit CuKα-Strahlung, jeweils drei breite Halos aufweisen (bei 2Theta = 30,6°, 49,4° und 59,0°). Diese sind typisch für amorphe Zirkoniumdioxid-Materialien ohne dreidimensionale Fernordnung. Die entsprechenden Röntgenpulverdiffraktogramme beider Materialien sind in Fig. 18 gezeigt.

Der Stand der Technik offenbart nicht, dass die Redispergierbarkeit der Nanopartikel entscheidend von der stufenweise gesteuerten Aufheizung in Verbindung mit einer sequenziellen Edukt- und/oder Lösungsmittel-Zugabe abhängt und dadurch erhöht werden kann.

### Aufgabe

Aufgabe der Erfindung ist es, ein Verfahren zur Verfügung zu stellen, mit dem gemischte Metallhalogenid-Alkoxide hergestellt werden können. Diese Aufgabe wird durch das erfindungsgemäße Verfahren mit den kennzeichnenden Merkmalen des unabhängigen Anspruchs 1 gelöst.

Weiterhin ist es Aufgabe der Erfindung, ein Verfahren zur Verfügung zu stellen, mit dem aus den Metallhalogenid-Alkoxiden Metalloxid-Nanopartikel hergestellt werden können, die gegenüber Nanopartikeln gemäß dem Stand der Technik leichter und in polaren sowie polar-protischen Lösungsmitteln dispergierbar sind, sowie eine Oberflächenmodifizierung mit geringerer Schichtdicke aufweisen, so dass nachteilige Einflüsse der Oberflächenmodifizierung auf die Eigenschaften der Nanopartikel weniger stark ausgeprägt sind.

Die abhängigen Ansprüche zeigen weitere vorteilhafte Ausgestaltungen des erfindungsgemäßen Verfahrens. Die erfindungsgemäßen Verwendungen der Metalloxid-Nanopartikel werden durch den abhängigen Anspruch 15 beschrieben. Der Wortlaut sämtlicher Ansprüche wird hiermit durch Bezugnahme zum Inhalt der Beschreibung gemacht.

### Beschreibung

Bei der vorliegenden Erfindung handelt es sich um ein Verfahren zur Herstellung von hochkristallinen Metalloxid-Nanopartikeln mittels der nicht-hydrolytischen Sol-Gel-Methode. Die Erfindung umfasst zudem sowohl die Nanopartikel selbst, als auch deren Verwendung zur Herstellung von Metalloxid-Halbleitersensoren, von funktionalen Beschichtungen auf metallischen oder nichtmetallischen Substraten, sowie von Katalysatoren. Weiterhin umfasst die Erfindung die Verwendung der Metalloxid-Nanopartikel als Additive bei der Verarbeitung von Kunststoffen (Polymeren), als Adsorbentien für Flüssigkeiten oder Gase sowie als Absorbentien für elektromagnetische Strahlung.

Inhalt der Erfindung sind weiterhin die gemischten Metallhalogenid-Alkoxide der allgemeinen Formel MXₘ₋ₙ(OR)ₙ, die bei der Durchführung des erfindungsgemäßen Verfahrens als Zwischenprodukte entstehen. "X" bezeichnet hierbei ein Halogenid-Anion, besonders bevorzugt Chlorid, und "OR" ein Alkoholat-Anion, besonders bevorzugt n-Propylat. "m" und "n" sind ganzzahlige Formelindices, wobei "m" Werte von 2 bis 5 annehmen kann, und "n" Werte von 1 bis m-1. Die betreffenden Metallhalogenid-Alkoxide entstehen bevorzugt während der ersten drei Heizphasen des erfindungsgemäßen Verfahrens, sowie nach Zugabe des zweiten Eduktes. Sie können aber auch erst bei späteren Heizphasen, sowie nach Zugabe weiterer Lösungsmittel infolge Reaktion mit dem jeweiligen Lösungsmittel entstehen.

Als Lösungsmittel werden im Rahmen dieser Beschreibung auch Fluide bezeichnet, in denen die Metalloxid-Nanopartikel dispergiert werden können, ohne dass dabei eine echte molekulare Lösung entsteht. Der Begriff "Lösungsmittel" umfasst im Rahmen der vorliegenden Offenbarung also nicht nur Fluide, in denen echte Lösungen vorliegen (z. B. der löslichen Edukte), sondern auch solche, in denen sich Dispersionen (zum Beispiel der Nanopartikel) gebildet haben.

Da die erfindungsgemäß verwendbaren Lösungsmittel alkoholische OH-Gruppen aufweisen, können sie mit den Edukten auch chemische Reaktionen eingehen. Die Bezeichnung eines Inhaltsstoffes der erfindungsgemäßen Reaktionsmischung als Lösungsmittel schließt daher eine reaktive Beteiligung an der Umsetzung der Edukte oder der Zwischenprodukte nicht aus.

Mit dem Begriff "Nanopartikel" werden im Rahmen der vorliegenden Erfindung Partikel bezeichnet, deren mittlerer Durchmesser im Bereich von ca. 1 nm bis ca. 500 nm liegt, bestimmt mittels Röntgenpulverdiffraktometrie oder durch andere optische Verfahren, z.B. Lichtstreuung.

Die Begriffe "Vorläuferverbindung" und "Edukt" werden im Rahmen der vorliegenden Offenbarung synonym verwendet. Gleiches gilt für die Bezeichnungen "Metallhalogenid-Alkoxid" und "Metallalkoxid-Halogenid".

Als "Kristallinität" wird der durch Röntgenpulverdiffraktometrie nachgewiesene generell kristalline Aufbau der Nanopartikel angesehen.

Verfahren zur Herstellung von Nanopartikeln aus Metalloxiden sind im Stand der Technik bekannt. Auch die Modifizierung der Oberfläche von oxidischen Nanopartikeln, zum Beispiel durch Anbindung von organischen Molekülen, ist bereits bekannt. Nachteilig bei den bekannten Modifizierungen ist jedoch deren Schichtdicke. Je größer die Schichtdicke der Oberflächenmodifikation ist, umso stärker werden die Eigenschaften und das Verhalten der Nanopartikel beeinflusst. Beispielsweise führt eine die Nanopartikel modifizierende Oberflächenbeschichtung mit großer Schichtdicke dazu, dass bei Weiterverarbeitungen, die ein Versintern der Nanopartikel erfordern, vermehrt Rissbildung auftritt, wenn sich die Oberflächenbeschichtung zersetzt. Bei erfindungsgemäß hergestellten Nanopartikeln ist dieser nachteilige Effekt weitaus geringer ausgeprägt.

Die genaue Natur der erfindungsgemäßen Oberflächen-Modifikation ist noch ungeklärt. A priori würde man erwarten, dass das Oberflächen-Modifizierungsmittel mit der Sauerstofffunktion (OH-Gruppe) an die oxidische Oberfläche gebunden wird, so dass der hydrophobe Molekülrest von der Oberfläche weg weist. Das sollte aber gemäß Stand der Technik zu einer unpolareren Oberfläche führen, die ihrerseits zu einer guten Dispergierbarkeit in apolaren Lösungsmitteln führen müsste. Da aber im Gegensatz dazu die Dispergierbarkeit der erfindungsgemäßen Nanopartikel in polaren Dispergiermitteln besonders gut ausgeprägt ist, muss neben chemischer Anbindung an die Oberfläche via Sauerstofffunktionalität auch eine andersartige (eventuell sehr starke adsorptive) Verankerung des Oberflächen-Modifikationsmittels auftreten, die dazu führt, dass die Sauerstofffunktionalität des Modifizierungsmittels von der Partikeloberfläche weg weist, was zur einer sterischen Stabilisierung der Partikel führt, die entsprechend günstig ist für die Dispergierung in den verwendeten polaren Lösungsmitteln.

Überraschenderweise wurde gefunden, dass sich die Eigenschaften von Nanopartikeln, ausgedrückt in ihrer Dispergierbarkeit in polaren und/oder protischen Lösungsmitteln sowie in ihrer Kristallinität, deutlich verbessern, wenn man im Rahmen des Herstellungsprozesses die Temperaturführung dynamisch gestaltet, und das Reaktionsmedium während der Umsetzung sukzessive modifiziert, insbesondere das Lösungsmittel variiert und Edukte gezielt erst im Verlauf der Umsetzung zugibt.

Im Gegensatz zum Stand der Technik, in dem nur Partikel erhalten werden können, die ausschließlich in unpolaren organischen Lösungsmitteln dispergierbar sind, sind die erfindungsgemäß hergestellten Nanopartikel sehr gut in polaren u. polar/protischen Lösungsmitteln wie z. B. Alkohole, Wasser, niedere Ketone, Ether u. dgl. dispergierbar.

Ohne an eine Theorie gebunden zu sein, kann die Wirkweise des erfindungsgemäßen Verfahrens wie folgt beschrieben werden:
Durch die gestufte Reaktionsführung in Verbindung mit der sukzessiven Edukt-Zugabe kann die Gesamtumsetzung auf einer oder mehreren Zwischenstufen angehalten werden. Es ist dadurch möglich, gemischte Alkoxid-Halogenide herzustellen und selektiv zur Umsetzung mit dem jeweils nächsten Edukt zu bringen, ohne dass dabei eine unkontrollierte Reaktion zum Endprodukt erfolgt. Jedes einzelne Zwischenprodukt in der Gesamt-Reaktionssequenz wird so unter den jeweils eigenen optimalen Bedingungen synthetisiert, und man erhält am Ende der Reaktionssequenz eine einheitliche Vorstufe, die dann unter milden Bedingungen zum Endprodukt abreagiert. Erfindungsgemäß erfolgt keine Isolierung der Zwischenprodukte, wobei es jedoch ohne weiteres ersichtlich und für den Fachmann naheliegend ist, dass eine Isolierung der Zwischenprodukte ebenfalls in den Umfang der Erfindung sowie ihrer Äquivalente fällt. Insbesondere betrifft dies die gemischten Metallhalogenid-Alkoxide, also zum Beispiel die Verbindungen Dipropoxyzirkonium(IV)-chlorid (ZrCl₂(OC₃H₇)₂) und Dihexoxyzirkonium(IV)-chlorid (ZrCl₂(OC₆H₁₃)₂).

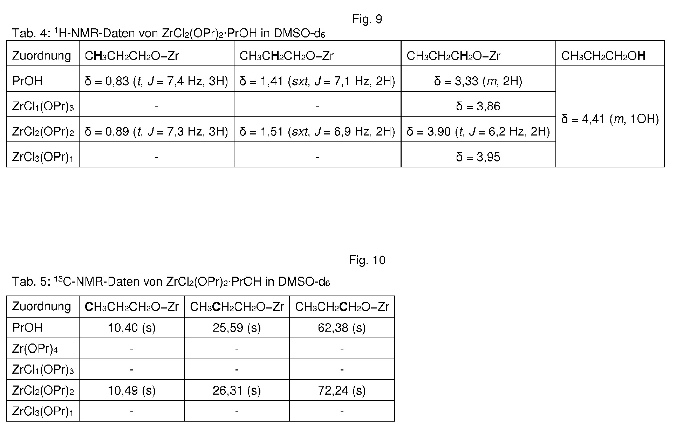

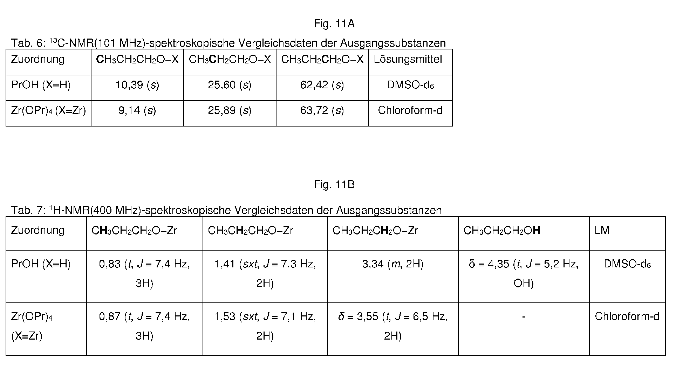

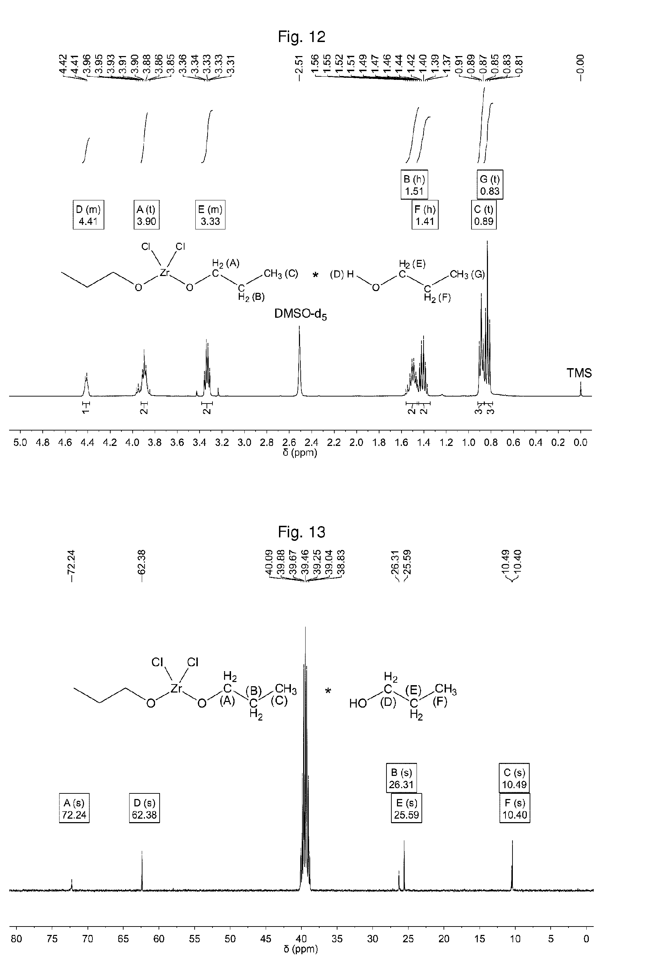

In den Abbildungen Fig. 9 bis 13 sind beispielhaft die charakterisierenden spektroskopischen ¹H- und ¹³C-NMR-Daten des Dipropoxyzirkonium(IV)-chlorid zusammengestellt. Es zeigt sich, dass das Dipropoxyzirkonium(IV)-chlorid in Lösung im Gleichgewicht mit Tripropoxyzirkonium(IV)-chlorid und Monopropoxyzirkonium(IV)-chlorid vorliegt. Dieses Verhalten von Verbindungen der Art MCl₂(OR)₂ ist in der Literatur bereits bekannt. Anhand der Daten ergibt sich im vorliegenden Fall folgende Gleichgewichtslage:

10% ZrCl₃(OPr)₁ ⇄ 80% ZrCl₂(OPr)₂ ⇄ 10% ZrCl₁(OPr)₃.

Weiterhin bekannt ist auch, dass Verbindungen der Art MClₘ₋ₙ(OR)ₙ in Gegenwart von primären Alkoholen (ROH) sogenannte Adduktkomplexe bilden. Dieses Verhalten wird für das Dipropoxyzirkonium(IV)-chlorid durch die durchgeführten ¹H-NMR-spektroskopischen Untersuchungen ebenfalls belegt.

Die Gesamt-Reaktionssequenz wird beispielhaft durch die Gleichungen (1) bis (5) wiedergegeben, ohne dass dadurch die Ausführbarkeit auf die dort genannten Edukte und Reaktionsparameter beschränkt wird:

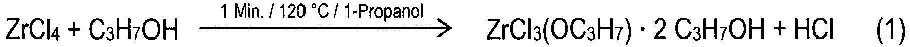

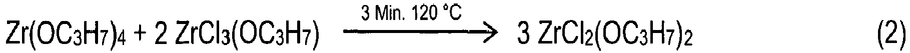

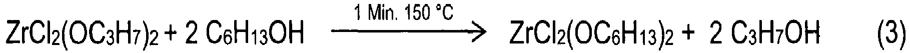

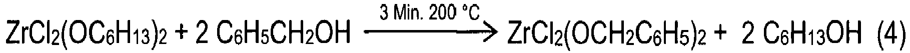

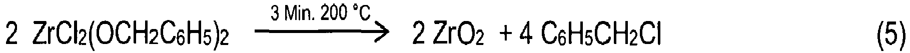

Diese selektive Temperaturführung in Verbindung mit der sukzessiven Edukt-Zugabe und Wahl der Lösungsmittelgemische führt dazu, dass die Morphologie der Oberfläche der Nanopartikel so modifiziert, bzw. optimiert wird, dass daraus die sehr gute Redispergierbarkeit in polaren und polar/protischen Lösungsmitteln resultiert. Weiterhin führt das erfindungsgemäße Verfahren zu einer besonders hohen Kristallinität der erhaltenen Nanopartikel, was mit Hilfe der Vergleichsversuche V1 und V2 belegt wurde.

Sowohl die gezielte Temperaturführung und die selektive Variation des Lösungsmittelgemisches, als auch die dabei erfolgende Entstehung bzw. die damit in Zusammenhang stehende Verwendung des jeweiligen Dialkoxy-Metallchlorids sind wesentlich für die Erfindung. Für den Fachmann ist leicht ersichtlich und naheliegend, dass die direkte Verwendung eines Alkoxy-Metallhalogenids als Edukt in Verbindung mit ein- oder mehrstufiger Temperaturführung in einer geeigneten Lösungsmittelmischung ebenfalls in den Umfang der Erfindung sowie ihrer Äquivalente fällt.

Das Oberflächen-Modifizierungsmittel wird im Zuge der Umsetzung nur sehr langsam durch das nachfolgend zugesetzte Lösungsmittel von der Oberfläche der sich bildenden Nanopartikel verdrängt. Dadurch wird zum einen die Umsetzung verzögert. Das heißt, das Oberflächen-Modifizierungsmittel trägt ebenfalls zur selektiven Steuerung der Umsetzung bei. Zum anderen führt die langsame Verdrängung des Oberflächen-Modifizierungsmittels dazu, dass es während der Umsetzung nicht vollständig verdrängt wird, sondern auf der fertig ausgebildeten Nanopartikel-Oberfläche verbleibt und so die Redispergierbarkeit vorteilhaft beeinflusst.

Die Erhitzung erfolgt mittels Mikrowellen. Dem Fachmann sind dazu geeignete Geräte wohlbekannt. Beliebige kommerziell erhältliche oder in Eigenbau gefertigte Geräte, die die gewünschte Heizleistung erbringen, können eingesetzt werden, ohne den Umfang der Erfindung oder ihrer Äquivalente zu verlassen.

Das erfindungsgemäße Verfahren lässt sich für zahlreiche Metalloxide anwenden, sofern die betreffenden Metalle in zwei-, drei, vier- oder fünfwertiger Form neutrale oder basische Oxide bilden können. Beispiele für Metalle, deren Alkoxide und/oder Halogenide erfindungsgemäß einzeln oder in Kombination als Vorläufersubstanzen eingesetzt werden können, sind die Metalle In, Zr, Ti, Ge, Sn, Pb und Sb wobei diese Aufzählung die erfindungsgemäß einsetzbaren Metalle nicht auf die genannten Beispiele einschränkt. Besonders bevorzugt ist der Einsatz von Vorläufersubstanzen, die die Metalle Zr, Ti, Sn, oder Ge enthalten.

Natürlich können die vorstehend explizit oder implizit genannten erfindungsgemäß einsetzbaren Metalle auch beliebig miteinander kombiniert werden, so dass die Herstellung von Mischoxid-Nanopartikeln aus mindestens zwei oder mehr Metalloxiden ebenfalls in den Umfang der Erfindung fällt. Besonders bevorzugte Kombinationen sind die Kombinationen von Antimon und Zinn einerseits sowie von Indium und Zinn andererseits, die zu den Mischoxiden Antimon-Zinn-Oxid (ATO) bzw. Indium-Zinn-Oxid (ITO) führen.

Das erfindungsgemäße Verfahren umfasst ebenfalls die Zugabe von Dotierstoffen. Die Zugabe der Dotierstoffe kann zu jedem beliebigen Zeitpunkt vor oder während der Durchführung des erfindungsgemäßen Verfahrens erfolgen. Als Dotierstoffe können ein oder mehrere Elemente aus der Liste enthaltend die Elemente Cu, Ag, Au, Co, Fe, Co, Ni, Ru, Rh, Pd, Os, Ir, Pt, N, S, P, Sc, Y, La, Lanthanoide (Seltenerdmetalle), Sr, Ba, Rb, Cs und Li ausgewählt werden, wobei diese Aufzählung die erfindungsgemäß einsetzbaren Dotierstoffe nicht auf die genannten Beispiele einschränkt. Besonders bevorzugt ist die Verwendung von Yttrium als Dotierelement in Zirkoniumdioxid.

Die Dotierstoffe werden bevorzugt in Form von anorganischen Salzen oder Alkoxiden der betreffenden Metalle zugegeben. Besonders bevorzugt ist die Zugabe von Nitraten und Alkoxiden. Die als Dotierstoffe verwendeten anorganischen Salze können erfindungsgemäß Feuchtigkeit, etwa in Form von Kristallwasser enthalten. Besonders bevorzugt ist es jedoch, wenn die Dotierstoffe in entwässerter Form zugegeben werden, um zu verhindern, dass in den Reaktionsansatz eingeschlepptes Wasser zu undefinierten Hydrolysereaktionen führt.

Die Aufgabe wird gelöst durch das erfindungsgemäße Verfahren, indem eine Reaktionsmischung bereitgestellt wird, die mindestens eine metallhaltige Vorläuferverbindung sowie mindestens einen einwertigen Alkohol enthält, wobei die Reaktionsmischung durch Mikrowellenbestrahlung erhitzt wird, und zwar stufenweise auf unterschiedliche Temperaturen. Dabei können während des Aufheizens oder während Unterbrechungen des Aufheizens sowohl mindestens eine oder mehrere weitere Vorläuferverbindungen, mindestens ein oder mehrere weitere Lösungsmittel und mindestens ein Oberflächen-Modifizierungsmittel zugegeben werden. Nach Abschluss der Reaktion wird das Produkt durch Zugabe eines apolaren Fällungsmittels ausgefällt. Zeitlich aufeinanderfolgende Heizstufen müssen nicht zwingend eine höhere Temperatur aufweisen als die vorausgegangenen; es ist durchaus möglich und liegt im Rahmen der Erfindung, dass eine nachfolgende Heizstufe eine niedrigere oder die gleiche Zieltemperatur aufweist wie die vorausgegangene.

Bei der mindestens einen metallhaltigen Vorläuferverbindung und/oder der mindestens einen weiteren metallhaltigen Vorläuferverbindung handelt es sich erfindungsgemäß um ein Metallhalogenid und/oder ein Metall-Alkoxid.
Als Metallhalogenide werden bevorzugt Iodide oder Bromide verwendet, und ganz besonders bevorzugt handelt es sich um Chloride.

Bei dem erfindungsgemäß verwendeten Metall-Alkoxid handelt es sich bevorzugt um ein Alkoxid, ausgewählt aus der Liste umfassend Methoxid, Ethoxid, n-Propoxid, i-Propoxid, n-Butoxid, sek-Butoxid und tert-Butoxid, wobei diese Aufzählung die erfindungsgemäß einsetzbaren Metall-Alkoxide nicht auf die genannten Beispiele einschränkt. Besonders bevorzugt handelt es sich um ein i-Propoxid, und ganz besonders bevorzugt um ein n-Propoxid. Weitere erfindungsgemäß verwendbare Metallalkoholate sind Metallalkoholate, die sich von Benzylalkohol oder Allylalkohol, sowie höheren n-Alkylalkoholen ableiten. Erfindungsgemäß verwendbare Alkoholate können auch mehrere unterschiedliche Alkoxid-Reste enthalten, d. h., die Verwendung sogenannter gemischter Alkoxide als Edukte fällt ebenfalls in den Umfang der Erfindung sowie ihrer Äquivalente.

Als Lösungsmittel können erfindungsgemäß beliebige Alkohole mit mindestens einer Hydroxylgruppe verwendet werden. Besonders bevorzugte Lösungsmittel sind Methanol, Ethanol, n-Propanol, iso-Propanol, n-Butanol, iso-Butanol, tert-Butanol, n-Pentanol, iso-Pentanol, n-Hexanol, n-Heptanol, n-Oktanol, Benzylalkohol und Allylalkohol, wobei diese Aufzählung die erfindungsgemäß einsetzbaren Lösungsmittel nicht auf die genannten Beispiele einschränkt. Natürlich fällt es ebenfalls in den Rahmen der Erfindung sowie Ihrer Äquivalente, zwei oder mehr der genannten Lösungsmittel gemeinsam oder nacheinander einzusetzen.

Als Oberflächen-Modifizierungsmittel eignen sich n-Pentanol, n-Hexanol, n-Heptanol, n-Oktanol und n-Oktadekanol, wobei diese Aufzählung die erfindungsgemäß einsetzbaren Oberflächen-Modifizierungsmittel nicht auf die genannten Beispiele einschränkt. Natürlich ist es im Rahmen der Erfindung möglich, zwei oder mehr Oberflächen-Modifizierungsmittel gleichzeitig oder nacheinander zuzugeben.

Im Einzelnen wird das Verfahren wie folgt durchgeführt, wobei mit dieser Beschreibung keine Beschränkung der Erfindung verbunden ist:

Die Reaktionsmischung aus der mindestens einen metallhaltigen Vorläuferverbindung (bevorzugt ein Metallhalogenid) und dem Lösungsmittel wird zunächst durch Mikrowellenheizung auf eine Temperatur zwischen 70 °C und 180 °C, bevorzugt zwischen 90 °C und 150 °C und besonders bevorzugt zwischen 110 °C und 130 °C geheizt, und sodann etwas abgekühlt. Nach Zugabe der mindestens einen weiteren metallhaltigen Vorläuferverbindung (bevorzugt ein Metallalkoholat) wird auf eine Temperatur zwischen 100 °C und 210 °C, bevorzugt zwischen 120 °C und 190 °C und besonders bevorzugt zwischen 140 °C und 160 °C geheizt, sowie anschließend erneut etwas abgekühlt. Hierbei entstehen die erfindungsgemäßen Metallhalogenid-Alkoxide als Zwischenprodukte. Diese können isoliert und separat weiterverarbeitet werden. Eine Möglichkeit der Isolierung besteht darin, das Lösungsmittel durch mehrstündige Behandlung im Vakuum bei erhöhten Temperaturen zu entfernen (zum Beispiel 6 Stunden Ölpumpenvakuum bei 100 °C). Alternativ werden direkt, also ohne Aufarbeitung, weitere Heiz- und Kühlphasen durchgeführt: Hierbei wird das Oberflächen-Modifizierungsmittel sowie ggf. ein weiteres Lösungsmittel zugegeben und auf eine Temperatur zwischen 120 °C und 260 °C, bevorzugt zwischen 170 °C und 240 °C und besonders bevorzugt zwischen 190 °C und 220 °C geheizt. Die Dauer der Heizphasen wird der Reaktivität der jeweiligen Metall-Vorläuferverbindungen sowie den Ansatzgrößen entsprechend angepasst. Sie liegt im Labormaßstab üblicherweise im Bereich von 1 bis 5 Min., kann aber naturgemäß in weiten Bereichen schwanken, ohne dadurch den Umfang der Erfindung oder ihrer Äquivalente zu verlassen.
Es ist ohne weiteres ersichtlich, dass es möglich ist, die vorstehend beschriebenen Heizphasen in beliebiger Reihenfolge und beliebig oft zu wiederholen, ohne dadurch den Umfang der Erfindung oder ihrer Äquivalente zu verlassen.

Die Kühlungsphasen zwischen den einzelnen Heizphasen unterliegen keinen Beschränkungen; bevorzugt wird mittels Druckluftkühlung auf Temperaturen von ca. 50 bis 90 °C abgekühlt. Es fällt jedoch ebenfalls in den Umfang der Erfindung sowie ihrer Äquivalente, die Kühlung durch einfaches Stehenlassen des Reaktionsansatzes und passive Abkühlung durch Wärmeaustausch mit der Umgebung zu realisieren. Auch der Einsatz flüssiger Wärmeträgermedien fällt in den Umfang der Erfindung sowie ihrer Äquivalente.

Die Durchmischung des Reaktionsansatzes kann, ohne den Umfang der Erfindung oder ihrer Äquivalente zu verlassen, auf beliebige, in Labor oder Produktion übliche Art und Weise erfolgen. In den vorliegenden Ausführungsbeispielen wurde üblicherweise mit einer Geschwindigkeit von 600 U./Min. mittels Magnetrührer gerührt (350 U./Min. bei Versuch A4).

Nach Beendigung der letzten Heizphase erfolgt die Aufarbeitung des Reaktionsansatzes:
Durch Zugabe von Fällungsmittel zur gegebenenfalls abgekühlten Reaktionsmischung wird das Metalloxid-Nanopulver ausgefällt, anschließend abzentrifugiert und gewaschen. Als Fällungsmittel können im Rahmen der Aufarbeitung beliebige apolare Lösungsmittel verwendet werden. Besonders geeignet sind n-Pentan, n-Hexan und n-Heptan, wobei diese Aufzählung die erfindungsgemäß einsetzbaren Fällungsmittel nicht auf die genannten Beispiele einschränkt. Als Waschlösungen werden üblicherweise Ether oder Ether/Alkohol-Mischungen verwendet.

Zentrifugation ist die bevorzugte Methode zur Trennung der Metalloxid-Nanopartikel von der Lösungsmittelmischung bzw. Waschflüssigkeit. Es ist jedoch ohne weiteres möglich, alternative Trennungsmethoden, zum Beispiel Filtration, Sedimentation o. a. zu verwenden, ohne dadurch den Umfang der Erfindung oder ihrer Äquivalente zu verlassen.

Es ist für den Fachmann ohne weiteres ersichtlich, dass es möglich ist, das Verfahren in einem geeigneten Durchflussreaktor auch kontinuierlich durchzuführen, ohne dadurch den Umfang der Erfindung oder ihrer Äquivalente zu verlassen.

Die erfindungsgemäßen Metalloxid-Nanopartikel können in vielfältiger Art und Weise angewendet werden, ohne den Umfang der Erfindung oder ihrer Äquivalente zu verlassen.
Beispielsweise werden die Metalloxid-Nanopartikel dazu verwendet, um optische Effekte auf transparenten Substraten zu erzielen, oder sensitive Schichten in Metalloxid-Halbleitersensoren herzustellen.
Weiterhin werden sie im Bereich Katalysatortechnologie unter Ausnutzung ihrer Eigenschaften als Katalysatormaterialien eingesetzt, oder im Bereich der Kunststofftechnologie als Additive für Polymermischungen zur Verbesserung der mechanischen Eigenschaften. Aufgrund ihrer großen Oberfläche werden sie auch als Adsorbentien, Fällungsmittel, Fällungshilfsmittel oder dergleichen, zum Beispiel in der Wasseraufbereitung, verwendet.

Weitere Ziele, Merkmale, Vorteile und Anwendungsmöglichkeiten der Erfindung ergeben sich aus der nachfolgenden Beschreibung von Ausführungsbeispielen. Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich, als auch in den verschiedensten Kombinationen erfindungswesentlich sein, unabhängig von ihrer Zusammenfassung in den Ansprüchen oder deren Rückbeziehung.

### Beschreibung der Zeichnungen

Die Zeichnungen zeigen im Einzelnen:

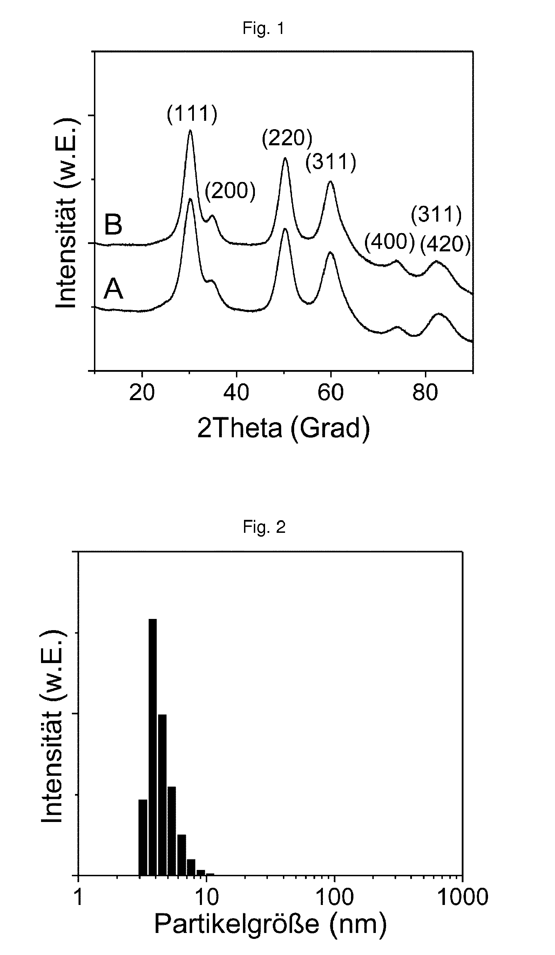

- Fig. 1: Röntgenpulverdiffraktogramme von nanokristallinen ZrO₂-Pulvermaterialien. (a) ZrO₂-Partikel mit einer mittleren Korngröße von 2,6 nm, hergestellt nach der Standard-Synthese (6 Stunden bei 140 °C, vgl. Vergleichsbeispiel V0). (b) ZrO₂-Nanopartikel mit einer mittleren Korngröße von 4,0 nm, hergestellt nach einer erfindungsgemäßen Variante der Mikrowellen-Synthese (z. B. 3 Min. bei 200 °C).
- Fig. 2: Partikelgrößenverteilung der dynamischen Lichtstreuung von ZrO₂-Nanopartikeln, hergestellt nach einer erfindungsgemäßen Variante der Mikrowellen-Synthese (z. B. 3 Min. bei 200 °C), in Wasser bei einer Dispersionskonzentration von 10 Gew.% ZrO₂. Der mittlere hydrodynamische Partikeldurchmesser (Zahlenmittel) beträgt unter der Annahme einer Kugelgestalt 4,1 nm.

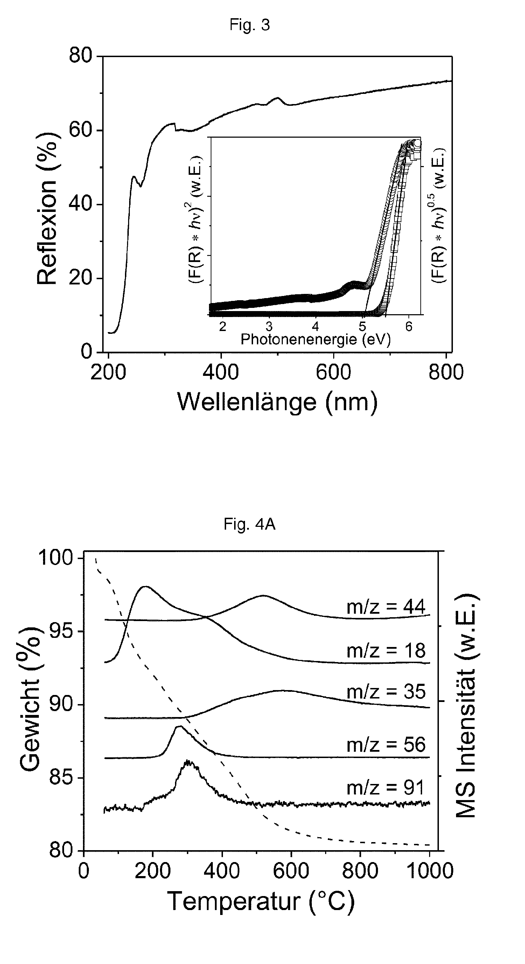

- Fig. 3: UV-Vis-Reflexionsspektrum von nanokristallinen ZrO₂-Partikeln, hergestellt nach einer erfindungsgemäßen Variante der Mikrowellen-Synthese (z. B. 3 Min. bei 200 °C). Der Einschub zeigt eine spezielle Auftragung der Kubelka-Munk-Funktion, F(R), in Abhängigkeit der Photonenenergie (*hv*) für direkte (□) und indirekte (○) optische Übergänge. Die optische Bandlückenenergie (*E_{g}*) kann durch Auftragen von (F(R)· *hv*)*ⁿ* gegen *h*v ermittelt werden, dabei beschreibt der Exponent *n* = ½ indirekt erlaubte sowie *n* = 2 direkt erlaubte Bandübergänge. Durch lineare Extrapolation von F(R) auf 0 wird eine indirekte Übergangsenergie von *Eg* = (5,05 ± 0,10) eV sowie eine direkte Übergangsenergie von *Eg* = (5,50 ± 0,10) eV bestimmt.
- Fig. 4A: Kombinierte thermogravimetrische und massenspektrometrische Analyse von einem nanokristallinen ZrO₂-Pulver hergestellt nach der Standard-Synthese (6 Stunden bei 140 °C, vgl. Vergleichsbeispiel V0), gemessen in synthetischer Luft (80% N₂ und 20% O₂). Die gestrichelte Linie illustriert die Thermogravimetrie-Kurve und zeigt die Gewichtsabnahme in Abhängigkeit von der Temperatur bei einer Heizrate von 5 °C/Min. Die beobachteten Fragmentionensignale werden jeweils H₂O⁺ (m/z = 18), Cl⁺ (m/z = 35), CO₂⁺ (m/z = 44), C₄H₈+ (m/z = 56) [Fragmention von C₆H₁₃O] und C₇H₇⁺ (m/z = 91) [Fragmention von C₇H₇O] zugeordnet. Restmasse nach 1000 °C: 80,5% (ca. 8-10% H₂O + ca. 8-10% Organik + ca. 1-2% Chlorid).

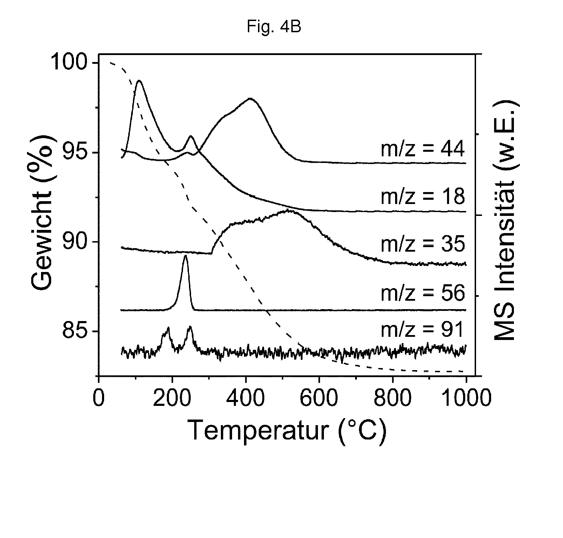

- Fig. 4B: Kombinierte thermogravimetrische und massenspektrometrische Analyse von einem nanokristallinem ZrO₂-Pulver (Ausführungsbeispiel A2), gemessen in synthetischer Luft (80% N₂ und 20% O₂). Die gestrichelte Linie illustriert die Thermogravimetrie-Kurve und zeigt die Gewichtsabnahme in Abhängigkeit von der Temperatur bei einer Heizrate von 5 °C/Min. Die beobachteten Fragmentionensignale werden jeweils H₂O⁺ (m/z = 18), Cl⁺ (m/z = 35), CO₂⁺ (m/z = 44), C₄H₈+ (m/z = 56) [Fragmention von C₆H₁₃O] und C₇H₇⁺ (m/z = 91) [Fragmention von C₇H₇O] zugeordnet. Restmasse nach 1000 °C: 82,8% (ca. 6-8% H₂O + ca. 8-10% Organik + ca. 1-2% Chlorid).

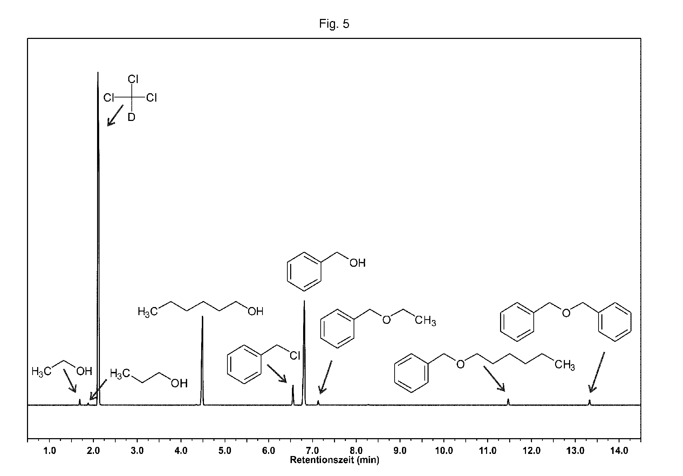

- Fig. 5: Gaschromatogramm der Reaktionslösung nach einer erfindungsgemäßen Mikrowellensynthese von ZrO₂ (z. B. 3 Min. bei 200 °C). Die ZrO₂-Partikel sind durch Fällung mit Chloroform-d von der Reaktionslösung abgetrennt worden.

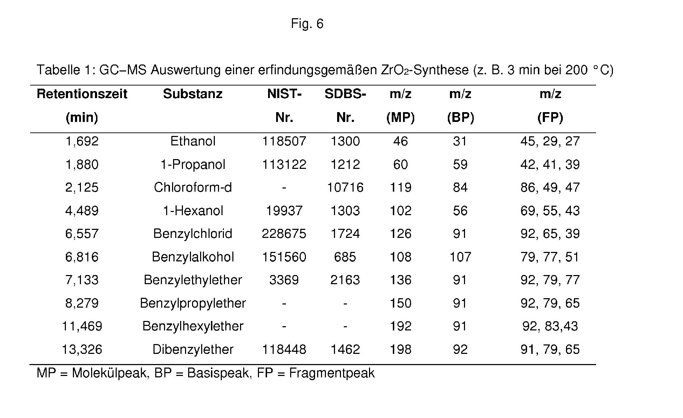

- Fig. 6: Tabellarische GC-MS-Auswertung der Reaktionslösung einer erfindungsgemäßen Mikrowellensynthese von ZrO₂-Nanopartikeln.
- Fig. 7A-C: Tabellarische Zusammenstellung der Versuchsparameter der Ausführungsbeispiele.
- Fig. 8: Tabellarische Zusammenstellung der Messergebnisse zur Charakterisierung der aus den Vergleichsbeispielen und Ausführungsbeispielen erhaltenen Materialproben.
- Fig. 9: Tabellarische Zusammenstellung der ¹H-NMR-Daten (400 MHz) von ZrCl₂(OPr)₂·PrOH in DMSO-d₆.
- Fig. 10: Tabellarische Zusammenstellung der ¹³C-NMR-Daten (101 MHz) von ZrCl₂(OPr)₂-PrOH in DMSO-d₆.
- Fig. 11A: Tabellarische Zusammenstellung der ¹³C-NMR-spektroskopischen Vergleichsdaten (400 MHz) der Ausgangssubstanzen.
- Fig. 11B: Tabellarische Zusammenstellung der ¹H-NMR-spektroskopischen Vergleichsdaten (101 MHz) der Ausgangssubstanzen.
- Fig. 12: ¹H-NMR-Spektrum von ZrCl₂(OPr)₂·PrOH, hergestellt nach Ausführungsbeispiel A4.
- Fig. 13: ¹³C-NMR-Spektrum von ZrCl₂(OPr)₂·PrOH, hergestellt nach Ausführungsbeispiel A4.

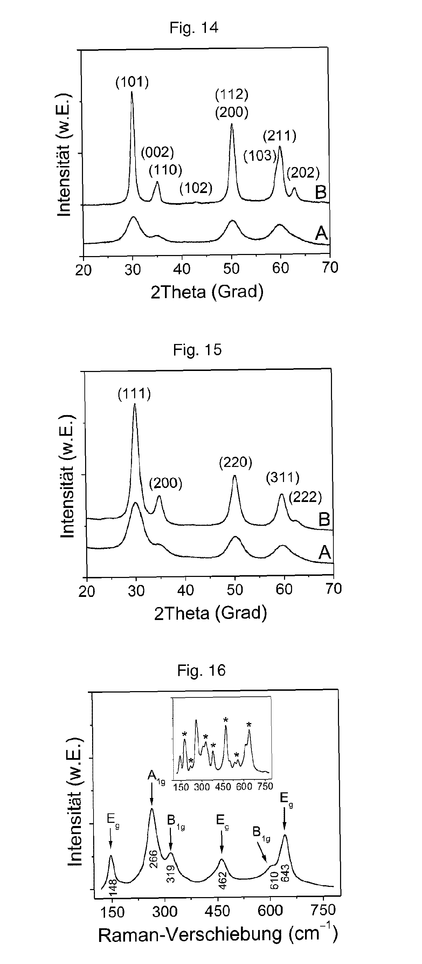

- Fig. 14: Röntgenpulverdiffraktogramme von nanokristallinen Yttriumstabilisierten Zirkoniumdioxid-(YSZ)-Pulvermaterialien mit der Zusammensetzung Zr_{0,97}Y_{0.03}O_{2-δ} (0 ≤ δ ≤ 0,02). A: YSZ-Nanopulver mit einer mittleren Korngröße von 3,0 nm, hergestellt gemäß Ausführungsbeispiel B0. B: YSZ-Nanopulver mit einer mittleren Korngröße von 10,0 nm nach thermischer Behandlung. Das YSZ-Nanopulver wurde mit einer Heizrate von 5 °C/min von Raumtemperatur auf 700 °C geheizt und anschließend auf Raumtemperatur abgekühlt. Die durchschnittliche Korngröße wurde unter Annahme einer tetragonalen Kristallstruktur aus der integralen Breite des (101) Beugungsreflexes mittels der Scherrer-Gleichung bestimmt.
- Fig. 15: Röntgenpulverdiffraktogramme von nanokristallinen Yttriumstabilisierten Zirkoniumdioxid-(YSZ)-Pulvermaterialien mit der Zusammensetzung Zr_{0,82}Y_{0,18}O_{2-δ} (0 ≤ δ ≤ 0,09). A: YSZ-Nanopulver mit einer mittleren Korngröße von 2,7 nm hergestellt gemäß Ausführungsbeispiel B3. B: YSZ-Nanopulver mit einer mittleren Korngröße von 5,0 nm nach thermischer Behandlung. Das YSZ-Nanopulver wurde mit einer Heizrate von 5 °C/min von Raumtemperatur auf 700 °C geheizt und anschließend auf Raumtemperatur abgekühlt. Die durchschnittliche Korngröße wurde unter Annahme einer kubischen Kristallstruktur aus der integralen Breite des (111), (200) und (220) Beugungsreflexes mittels der Scherrer-Gleichung bestimmt.
- Fig. 16: Raman-Spektrum eines nanokristallinen YSZ-Pulvers (Ausführungsbeispiel B0) mit der Zusammensetzung Zr_{0,9}7Y_{0,03}O_{2-δ} nach Wärmebehandlung bei 700 °C. Die im Spektrum indizierten Raman-Banden mit den dazugehörigen Phononen-Moden sind typisch für tetragonale YSZ-Keramiken und zeigen keinerlei Hinweise auf Verunreinigungen wie kubisches Y₂O₃ oder monoklines ZrO₂. Reines nanokristallines ZrO₂ (siehe Ausführungsbeispiele A0 bis A3) wandelt sich bei identischer Wärmebehandlung ohne die Zugabe von Yttrium teilweise in monoklines ZrO₂ um, wie das repräsentative Spektrum im Einschub zeigt. Das Symbol (*) weißt dabei auf die stärksten Raman-Banden der monokline Phase hin.
- Fig. 17: Fig. 17 zeigt transmissionselektronenmikroskopische Aufnahmen von ZrO₂-Partikeln gemäß Ausführungsbeispiel A1 (a, b), sowie eine Aufnahme der Feinbereichsbeugung (c). Im Beugungsbild sind charakteristische Debye-Scherrer-Ringe zu erkennen. Die berechneten Gitterabstände sind in guter Übereinstimmung mit der JCPDS-Karte Nr. 1-081-1551 für kubisches ZrO₂ mit Fluorit-Struktur ("JCPDS" = "Joint Committee on Powder Diffraction Standards").
- Fig. 18: Röntgenpulverdiffraktogramme von amorphen Zirkoniumdioxid-Proben, welche nach (a) 5 Min. bei 75 °C und (b) 30 Min. bei 135 °C in Anlehnung an die Offenlegungsschrift WO 2009/013187 A1 hergestellt wurden (Vergleichsversuche Nr. V1 und V2).

### Ausführungsbeispiele

Im Rahmen der Beschreibung der Ausführungsbeispiele werden folgende Abkürzungen verwendet:
DLS = Dynamische Lichtstreuung
GC = Gaschromatographie
Gew.% = Gewichtsprozent
JCPDS = Joint Committee on Powder Diffraction Standards
LM = Lösungsmittel
Min. = Minuten
NIST = National Institute of Standards and Technology
NMR = Kernspinresonanz (engl. Nuclear Magnetic Resonance)
RPD = Röntgenpulverdiffraktometrie
SDBS = Spectral Database for Organic Compounds
TEM = Transmissionselektronenmikroskopie
Temp. = Temperatur
U. = Umdrehungen
w.E. = willkürliche Einheiten

Speziell im Zusammenhang mit den NMR-spektroskopischen Untersuchungen werden folgend Abkürzungen verwendet:
δ = chemische Verschiebung
DMSO-d₆ = sechsfach deuteriertes Dimethylsulfoxid
J = Kopplungskonstante in Hz

Für die NMR-spektroskopischen Signal-Aufspaltungsmuster werden weiterhin folgende Abkürzungen verwendet:
s = Singulett
d = Dublett
t = Triplett
q = Quartett
qui = Quintett
sxt = Sextett
m = Multiplett

Für die Charakterisierung der Nanopartikel-Proben gemäß den nachfolgend beschriebenen Ausführungs- bzw. Vergleichsbeispielen werden die folgenden Parameter verwendet:
- Kristallinität
- Redispergierbarkeit
- Korngröße und Partikelgrößenverteilung

Die Kristallinität wird mittels Röntgenpulverdiffraktogrammen ermittelt.
Die Röntgenpulverdiffraktogramme werden dazu auf einem geeigneten Gerät, zum Beispiel einem PANalytical X'Pert PRO Pulverdiffraktometer, unter Verwendung der Cu-Kα-Linie (Röntgenröhre vom Typ PW3373/10, Wellenlänge 0,1540598 nm) in Theta-Theta Geometrie (Reflektion) aufgezeichnet. Die Spannung wird dazu auf 40 kV und die Stromstärke auf 40 mA eingestellt. Als Detektor wird ein ortsempfindlicher Hochgeschwindigkeits-Detektor (X'Celerator) verwendet.
Die Einstellparameter für die Messungen sind:

| | |
|---|---|
| Scangeschwindigkeit (°/s): | 0,005305 |
| Schrittweite (°): | 0,167 |
| Soller-Schlitz (°): | 0,04 |
| Primär-Schlitz (°): | 0,5 |
| Drehung des Probentellers (U/Min.): | 7,5 |

Die durchschnittlichen Korngrößen der Nanopartikel werden jeweils unter Annahme kubischer Kristallstrukturen aus den integralen Breiten der (111), (200) und (220) Beugungsreflexe mittels der Scherrer-Gleichung, *D* = (*λ*·0,9) / (*β*_{1/2}·cosΘ), bestimmt. In dieser ist *D* die Kristallitgröße, *λ* die Wellenlänge der verwendeten Röntgenstrahlung, *β*_{1/2} die integrale Breite des Reflexes und Θ der Beugungswinkel des Reflexes.

Die TEM-Untersuchungen werden mit einem dafür geeigneten Gerät, zum Beispiel vom Typ CM30-ST der Fa. Philips mit einer Beschleunigungsspannung von 300 kV durchgeführt.

Geeignet für die Durchführung der GC-MS-Untersuchungen sind zum Beispiel die beiden folgenden Geräte:
1.) Gaschromatograf Agilent 6860 mit massensensitivem Detektor Agilent 5973 MSD und J&W Quarzglassäule (30m x 0,25mm; 0,25 µm DB-5MS mit 5% Phenyl- und 95% Methylsilikon als stationärer Phase). Die Parameter des Temperaturprogramms lauten: 2 Min. 60 °C, Aufheizen von 60 °C auf 250 °C mit einer Rate von 15 °C/Min., sodann Halten der Temperatur von 250 °C für 10 Min. Temperatur Injektor: 250 °C; Temperatur Transferleitung: 280 °C.
2.) Gaschromatograf HP 6890 Ser. II mit Säule Zebron ZB 5 (30m x 0,25mm; 0,25 µm), verbunden mit einem Quadrupol-Massenspektrometer HP MSD 5971 (70 eV). Als GC-Kapillarsäule wird Zebron ZB 5 (5 % Phenyl- und 95 % Methylsilikon) verwendet.

Beide Geräte werden gekoppelt betrieben; als Trägergas wird Helium verwendet.

Die Partikelgrößenverteilungen werden via dynamischer Lichtstreuung mit einem dafür geeigneten Gerät, zum Beispiel dem Gerät "Nanotrac Particle Analyzer Model StabiSizer^{®} PMX 200C" der Fa. Microtrac, Inc. (USA), in dem Bereich von 0,8 nm bis 6,5 µm ermittelt. Messmethode ist die Analyse der Verschiebung im Frequenz-Leistungsspektrum. Die Messungen werden bei Raumtemperatur (298 K) und einem Streuwinkel von 180° durchgeführt; Als Laserlichtquelle dient ein Diodenlaser (Klasse IIIB) mit einer Wellenlänge von 780 nm und einer nominalen optischen Leistung von 3 mW. Die Proben werden 24 Stunden vor der Messung präpariert. Das Probenvolumen beträgt jeweils 1,5 mL und enthält jeweils ca. 10 Gewichtsprozent Metalloxid, dispergiert im jeweiligen Lösungsmittel.

Die thermogravimetrischen Untersuchungen werden mittels einer dafür geeigneten Thermowaage der Fa. Netzsch (Typ STA409PC), gekoppelt mit einem Quadrupol-Massenspektrometer (Typ QMG421, 70 eV Ionisierungsenergie) der Fa. Balzers durchgeführt. Eine Probe von jeweils 15 bis 20 mg (bzw. 30 bis 40 mg, je nach Tiegelgröße) wird in einem Aluminiumoxid-Tiegel in einem Gemisch aus 80 Teilen Argon und 20 Teilen Sauerstoff (Gesamtflussrate: 50 mL pro Min.) mit einer Rate von 5 °C pro Minute auf 1000 °C aufgeheizt. Die Datenaufnahme des Massenspektrometers erfolgt dabei im Bereich von 10 bis 100 Atommasseneinheiten. Parallel wird jeweils eine Korrekturmessung mit einem leeren Tiegel durchgeführt. Alternativ wird auch eine Mischung von Argon mit synthetischer Luft verwendet (20 mL/Min. Argon und 30 mL/Min. synthetische Luft, bestehend aus 80% N₂ und 20% O₂).

Die optischen Spektren werden in diffuser Reflexion an einem dafür geeigneten Gerät, zum Beispiel einem Perkin-Elmer Lambda 750 UV-Vis-NIR-Spektrometer, ausgestattet mit einer Praying-Mantis-Spiegeleinheit, aufgezeichnet. Für die Referenzkalibration wird Spectralon (Typ DRP-SPR der Firma Harrick Scientific Products) als nicht absorbierender Reflexionsstandard (Weißstandard) verwendet. Die Messungen werden im Spektralbereich von 200 nm bis 2400 nm mit einer Messgeschwindigkeit von 141,20 nm/Min. aufgezeichnet. Die erhaltenen UV-Vis-Reflexionsspektren werden mit der Kubelka-Munk-Funktion, F(R) = (1-R)² / 2R, in Absorptionsspektren umgewandelt. Dabei ist F(R) die Kubelka-Munk-Funktion und R das diffuse Reflexionsvermögen der Probe für "unendliche" Schichtdicke relativ zu dem Reflexionsvermögen eines Standards entsprechend der Kubelka-Munk-Theorie. Der PbS-Detektor-Verstärker für den NIR-Bereich wird auf Null gesetzt; im Strahlengang wird ein 10%-Abschwächer verwendet.

Die NMR-spektroskopischen Untersuchungen werden mit den dafür geeigneten Geräten Avance II 400 MHz WB Spektrometer bzw. Avance II 200 MHz (Microbay) Spektrometer der Firma Bruker bei Raumtemperatur aufgezeichnet. Als interner Standard dient Tetramethylsilan (TMS). Die NMR-Rohdaten werden mit der NMR-Auswertesoftware MestReNova eingelesen und ausgewertet.

Die Bestimmung der Redispergierbarkeit erfolgt mit dem nachstehend beschriebenen selbst erarbeiteten Verfahren:
Im Anschluss an die Aufarbeitung des Reaktionsansatzes (vgl. nachfolgende allgemeine Versuchsbeschreibung, bzw. Beschreibungen der Vergleichsbeispiele) wird die zu prüfende Probe mit dem Medium für die Redispergierung (H₂O, Alkohol) versetzt. Bei Verwendung von nichtwässrigen Dispergiermedien kann die Zugabe von wenigen Tropfen Wasser den Redispergierungsprozess erleichtern. Die Redispergierung selbst erfolgt sodann durch Schütteln mit einem Plattformschüttler und führt zu Dispersionen mit Gehalten an Metalloxid-Nanopartikeln von bis zu 10 Gewichtsprozent und mehr. Der Grad an Redispergierung wird durch eine gravimetrische Gehaltsbestimmung ermittelt, indem ein Aliquot des Redispergats bis zur Trockene eingedampft und rückgewogen wird.

Vergleichsbeispiel ohne Mikrowellenheizung (Versuch Nr. V0, nicht erfindungsgemäß):
Unter Schutzgas (N₂, Ar oder He) werden 0,6 g (2,575 mmol) Zirconium(IV)-chlorid (ZrCl₄) in einem Dreihalskolben vorgelegt, und unter Rühren 1,15 mL (2,57 mmol) Zirkonium(IV)-n-propylat-Lösung (Zr(OPr)₄·PrOH) zugegeben. Nun wird zunächst auf 50 °C erhitzt, anschließend werden 5 mL Ethanol (EtOH) hinzugefügt, und die Reaktionslösung auf 120 °C erhitzt. Dabei werden Ethanol und Propanol abdestilliert.
Nachdem ca. 5 mL Alkoholgemisch abdestilliert wurden, werden 15 mL 1-Hexanol (HexOH) zur Reaktionslösung hinzugegeben und die Ölbadtemperatur von 120 °C auf 140 °C erhöht. Nach Erreichen der Ölbadtemperatur von 140 °C wird mit 15 mL Benzylalkohol (PhCH₂OH) versetzt, und für weitere 6 Stunden gerührt. Nach dem Abkühlen wird die erhaltene Reaktionsmischung in 400 mL n-Pentan gegeben. Der erhaltene Niederschlag (ZrO₂-Partikel) wird bei 3500 U/Min. für 10 Min. zentrifugiert. Der Niederschlag wird anschließend mit wenig Diethylether (ca. 50 mL) gewaschen und erneut zentrifugiert. Anschließend wird das noch etherfeuchte ZrO₂-Pulver bei Raumtemperatur ca. 10 Min. getrocknet. Die Ausbeute beträgt etwa 500 mg ZrO₂.

Vergleichsbeispiele entsprechend der OS WO 2009/013187 A1 (Versuche Nr. V1 und V2, nicht erfindungsgemäß):
Es wird zunächst eine Mischung aus 2 mmol Zr(OPr)₄ (Fa. Sigma Aldrich) und 20 mL Isopropanol vorgelegt. Zu der Mischung werden 3,5 mmol Kaliumhydroxid (Fa. Sigma Aldrich) zugegeben. Das Gemisch wird unter Rühren (325 U./Min.) auf 75 °C (Versuch Nr. V1) bzw. 135 °C (Versuch Nr. V2) innerhalb von 4,5 bzw. 8 Min. mittels Mikrowelle (Monowave 300, Fa. Anton Paar) erhitzt und 5 bzw. 30 Min. bei dieser Temperatur gehalten. Der erhaltene Feststoff wird durch Zentrifugieren vom Lösungsmittel abgetrennt und zweimal mit je 30 mL Isopropanol gewaschen. Anschließend wird das Isopropanol an einem Rotationsverdampfer vollständig entfernt.

Allgemeine Versuchsbeschreibung der erfindungsgemäßen Durchführung mittels Mikrowellenheizung (Versuche Nr. A0 bis A4 und B0 bis B3):

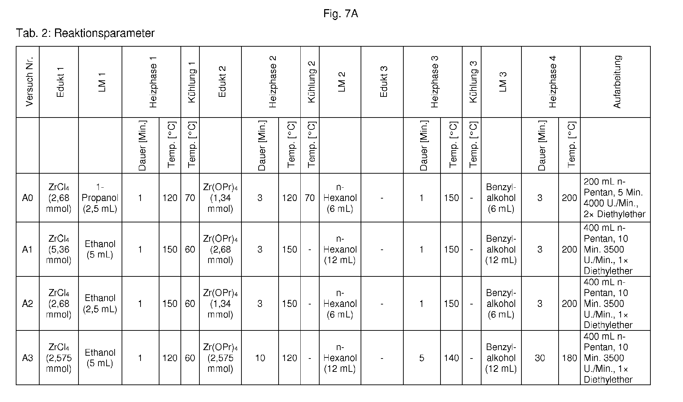

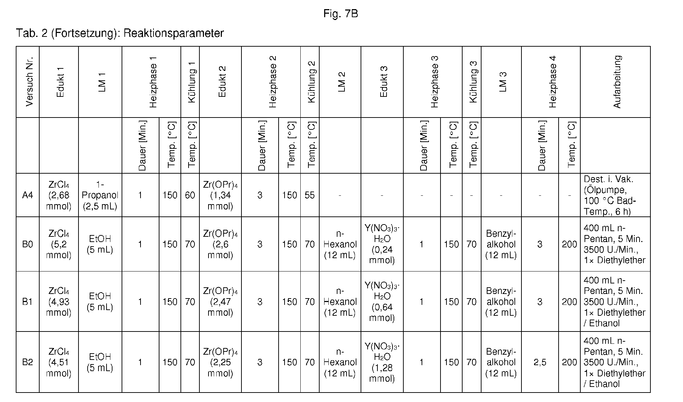

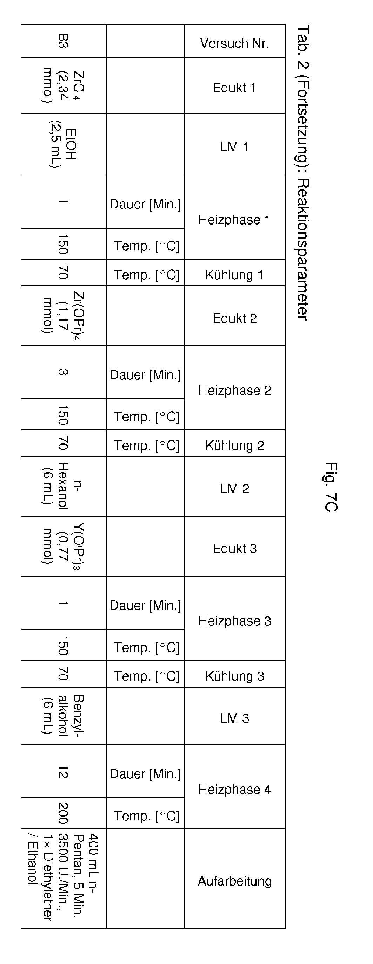

Die Mengen-, Zeit- und Temperaturangaben, sowie Edukte und Lösungsmittel sind in Tabelle 2 (Fig. 7A-C) angeführt. Für die Mikrowellenbeheizung wurde der Mikrowellensynthese-Reaktor Monowave 300 der Fa. Anton Paar GmbH verwendet, ohne dass damit eine Beschränkung der Erfindung verbunden ist. Alle Eduktund Lösungsmittelzugaben sowie die Umsetzungen selbst werden unter Schutzgas (Ar, N₂) durchgeführt.

In einer 30-mL-Glasphiole wird das Metallhalogenid (Edukt 1) vorgelegt und die in Tabelle 2 (Fig. 7A-C) angegebene Menge Lösungsmittel (LM 1) hinzugefügt. Die Mischung wird anschließend entsprechend den Parametern der Heizphase 1 gerührt. Nach Abkühlen entsprechend den Angaben in der Spalte "Kühlung 1" wird das Edukt 2 in Reinform oder als Lösung in einem geeigneten Lösungsmittel, zum Beispiel einem Alkohol, zugegeben, der Ansatz entsprechend den Parametern der Heizphase 2 gerührt, sowie anschließend entsprechend den Angaben in der Spalte "Kühlung 2" abgekühlt. Analog wird mit allen weiteren Edukt- bzw. Lösungsmittelzugaben sowie Heiz- und Kühlungsphasen entsprechend den Angaben in Tabelle 2 (Fig. 7A-C) verfahren.

Zur Aufbereitung wird die erhaltene Partikeldispersion entsprechend den Angaben in der Spalte "Aufarbeitung" von Tabelle 2 (Fig. 7A-C) mit dem entsprechenden Fällungsmedium vermischt, zentrifugiert und gewaschen. Die Waschprozedur wird gegebenenfalls noch ein weiteres Mal wiederholt. Anschließend wird das Produkt noch einige Min. an der Luft oder unter Schutzgas getrocknet und kann dann in diversen polaren Lösungsmitteln redispergiert werden.

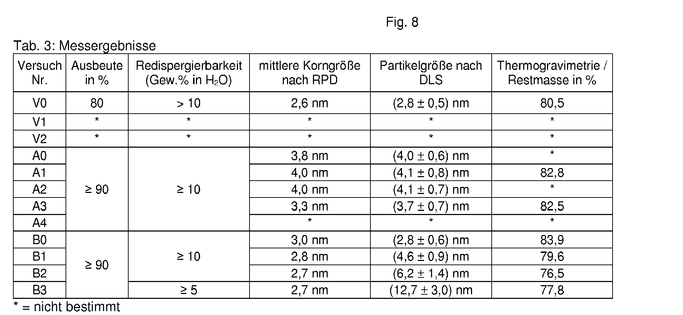

Die Ergebnisse der durchgeführten Messungen zur Charakterisierung der einzelnen Proben sind in Tabelle 3 (Fig. 8) zusammengestellt.

Bei der Herstellung von Yttrium-stabilisiertem Zirkoniumdioxid ("YSZ") ist es besonders vorteilhaft, Yttriumnitrat-Monohydrat (Y(NO₃)₃·H₂O) als Dotiersubstanz zu verwenden, anstelle von Y(NO₃)₃·6H₂O. Yttriumnitrat-Monohydrat (Y(NO₃)₃·H₂O) ist nicht kommerziell erhältlich; es wird aus kommerziell erhältlichem, sechs Moleküle Kristallwasser pro Formeleinheit enthaltendem Yttriumnitrat-Hexahydrat (Y(NO₃)₃·6H₂O) wie folgt hergestellt: In einem auf 170 °C temperierten Trockenschrank wird eine der Ansatzgröße entsprechende Menge an Y(NO₃)₃·6H₂O für eine Dauer von 12 Stunden getempert. Das erhaltene hygroskopische Y(NO₃)₃·H₂O wird unter Feuchtigkeitsausschluß in wasserfreiem n-Hexanol gelöst und in der YSZ-Partikelsynthese eingesetzt.

## Patentansprüche

1. Verfahren zur Herstellung eines gemischten Metallhalogenid-Alkoxids der allgemeinen Formel MXₘ₋ₙ(OR)ₙ, wobei
- X ein Halogenid-Anion ist, besonders bevorzugt Chlorid,
- OR ein Alkoholat-Anion ist, besonders bevorzugt n-Propylat, und
- m und n ganzzahlige Formelindices sind, wobei m Werte von 2 bis 5 annehmen kann, und n Werte von 1 bis m-1,
umfassend
a. die Bereitstellung einer Reaktionsmischung, hergestellt durch Vermischen einer ersten metallhaltigen Vorläuferverbindung mit einer zweiten metallhaltigen Vorläuferverbindung und mit mindestens einem einwertigen Alkohol als Lösungsmittel, sowie
b. die Erhitzung der Reaktionsmischung mittels Mikrowellen, **dadurch gekennzeichnet, dass**
i. die Reaktionsmischung stufenweise auf unterschiedliche Temperaturen aufgeheizt wird, wobei sich zwischen den Heizphasen Kühlphasen befinden, in denen die Reaktionsmischung gekühlt wird, und
ii. die zweite metallhaltige Vorläuferverbindung erst nach der ersten und vor der zweiten Heizphase zugegeben wird.

2. Gemischtes Metallhalogenid-Alkoxid, hergestellt nach Anspruch 1, **dadurch gekennzeichnet, dass** es sich um Dipropoxyzirkonium(IV)-chlorid handelt.

3. Verwendung eines gemischten Metallhalogenid-Alkoxids nach Anspruch 1 oder 2 zur Herstellung von Metalloxid-Nanopartikeln.

4. Verfahren zur Herstellung von Metalloxid-Nanopartikeln, **dadurch gekennzeichnet, dass** mindestens ein Produkt aus einem Verfahren nach Anspruch 1 weiteren Heiz- und Kühlphasen unterworfen wird, wobei
i. mindestens ein weiteres Lösungsmittel und/oder
ii. mindestens ein Oberflächen-Modifizierungsmittel erst im Laufe des weiteren stufenweisen Aufheizens während der Kühlphasen zugegeben werden, sowie
iii. nach Beendigung der Umsetzung das Produkt durch Zugabe eines apolaren Fällungsmittels ausgefällt wird.

5. Verfahren nach Anspruch 4, **dadurch gekennzeichnet, dass** es sich bei der ersten metallhaltigen Vorläuferverbindung um ein Metallhalogenid, besonders bevorzugt um ein Metallchlorid, handelt, und es sich bei der zweiten metallhaltigen Vorläuferverbindung um ein Metall-Alkoxid handelt.

6. Verfahren nach Anspruch 4, **dadurch gekennzeichnet, dass** es sich bei dem mindestens einen weiteren Lösungsmittel um ein Lösungsmittel aus der Liste handelt, umfassend die Lösungsmittel n-Propanol, n-Butanol, n-Pentanol, n-Hexanol, n-Heptanol, n-Oktanol, Benzylalkohol.

7. Verfahren nach Anspruch 4, **dadurch gekennzeichnet, dass** es sich bei dem mindestens einen Oberflächen-Modifizierungsmittel um ein Oberflächen-Modifizierungsmittel aus der Liste handelt, umfassend die Oberflächen-Modifizierungsmittel n-Pentanol, n-Hexanol, n-Heptanol, n-Oktanol und n-Oktadekanol.

8. Verfahren nach Anspruch 4, **dadurch gekennzeichnet, dass** es sich bei dem apolaren Fällungsmittel um ein apolares Fällungsmittel aus der Liste handelt, umfassend die apolaren Fällungsmittel n-Pentan, n-Hexan, n-Heptan.

9. Verfahren nach Anspruch 4, **dadurch gekennzeichnet, dass** die Reaktionsmischung stufenweise
a. zunächst auf eine Temperatur zwischen 70 °C und 180 °C, bevorzugt zwischen 90 °C und 150 °C und besonders bevorzugt zwischen 110 °C und 130 °C geheizt wird,
b. anschließend an Schritt a) auf eine Temperatur zwischen 100 °C und 210 °C, bevorzugt zwischen 120 °C und 190 °C und besonders bevorzugt zwischen 140 °C und 160 °C geheizt wird,
c. anschließend an Schritt b) auf eine Temperatur zwischen 120 °C und 260 °C, bevorzugt zwischen 170 °C und 240 °C und besonders bevorzugt zwischen 190 °C und 220 °C geheizt wird.

10. Verfahren nach einem der vorgenannten Ansprüche 4 bis 9 oder einer beliebigen Kombination von mindestens zwei der vorgenannten Ansprüche 4 bis 9, **dadurch gekennzeichnet, dass** es sich bei der ersten metallhaltigen Vorläuferverbindung und der zweiten metallhaltigen Vorläuferverbindung jeweils um eine Vorläuferverbindung handelt, die ein Element enthält, das ausgewählt ist aus der Liste umfassend die chemischen Elemente In, Zr, Ti, Ge, Sn, Pb und Sb, wobei die erste metallhaltige Vorläuferverbindung und die zweite metallhaltige Vorläuferverbindung entweder das gleiche Metall oder unterschiedliche Metalle enthalten.

11. Verfahren nach Anspruch 10, **dadurch gekennzeichnet, dass** der Reaktionsmischung mindestens ein Dotierstoff zugegeben wird, umfassend mindestens ein Element, ausgewählt aus der Liste enthaltend die chemischen Elemente Cu, Ag, Au, Co, Fe, Co, Ni, Ru, Rh, Pd, Os, Ir, Pt, N, S, P, Sc, Y, Lanthanoide (Seltenerdmetalle), Sr, Ba, Rb, Cs, Li.

12. Verfahren nach Anspruch 11, **dadurch gekennzeichnet, dass** als Dotierstoff mindestens Yttriumnitrat-Monohydrat, Y(NO₃)₃·H₂O, verwendet wird.

13. Metalloxid-Nanopartikel, hergestellt nach einem Verfahren gemäß einem der vorgenannten Ansprüche 4 bis 12.

14. Metalloxid-Nanopartikel, hergestellt nach einem Verfahren gemäß einem der vorgenannten Ansprüche 4 bis 12, **dadurch gekennzeichnet dass** die Nanopartikel Antimon-Zinn-Oxid (ATO) oder Indium-Zinn-Oxid (ITO) umfassen.

15. Verwendung von Metalloxid-Nanopartikeln, hergestellt nach einem der vorgenannten Ansprüche 4 bis 12,
a. zur Herstellung von funktionalen Beschichtungen auf metallischen oder nichtmetallischen Substraten oder
b. zur Herstellung von Katalysatoren oder
c. als Additive bei der Verarbeitung von Kunststoffen (Polymeren) oder
d. als Adsorbens für Flüssigkeiten oder Gase oder
e. als Absorbens für elektromagnetische Strahlung.
